# EUROPÄISCHE PATENTSCHRIFT

(11) **EP 4 102 976 B1**
(45) Veröffentlichungstag und Bekanntmachung des Hinweises auf die Patenterteilung: **11.06.2025**
(21) Anmeldenummer: 21704253.0
(22) Anmeldetag: 08.02.2021
(51) Int. Cl.: A22C 7/00

(54) **VORRICHTUNG UND VERFAHREN ZUM FORMEN EINES STRANGFÖRMIGEN LEBENSMITTELS**
DEVICE AND METHOD FOR SHAPING A STRAND-SHAPED FOOD PRODUCT
DISPOSITIF ET PROCÉDÉ POUR FAÇONNER UN PRODUIT ALIMENTAIRE DE FORME ALLONGÉE

(30) Priorität: 10.02.2020 DE 102020103311
(43) Veröffentlichungstag der Anmeldung: 21.12.2022
(73) Patentinhaber: TPV GmbH, 57641 Oberlahr (DE)
(72) Erfinder: REIFENHÄUSER, Uwe, 57632 Flammersfeld (DE)
(74) Vertreter: Bauer, Dirk
(86) Internationale Anmeldenummer: PCT/EP2021/052965
(87) Internationale Veröffentlichungsnummer: WO 2021/160563

(56) Entgegenhaltungen:
- EP-A1- 0 282 769
- EP-A1- 3 542 979
- EP-A2- 1 595 456
- DE-B3- 102018 106 299
- DE-U1- 202005 018 374
- US-B2- 7 578 732

## Beschreibung

Die Erfindung betrifft eine Vorrichtung zum Formen eines strangförmigen Lebensmittels, insbesondere eines Fleischstücks, mit einer Presskammer, die von Wandungen begrenzt ist, von denen mindestens eine mittels einer Presseinrichtung bewegbar und als Pressstempel ausgebildet ist, wodurch die Presskammer von einem Ausgangszustand mit einem ersten umschlossenen Volumen in einen Endzustand mit einem zweiten umschlossenen Volumen überführbar ist.

Des Weiteren betrifft die Erfindung ein Verfahren zum Formen eines strangförmigen Lebensmittels, insbesondere eines Fleischstücks.

### Stand der Technik

Zur industriellen Portionierung und Verpackung von strangförmigen Lebensmitteln, insbesondere von Fleischstücken, werden die Lebensmittel in aller Regel mittels einer Schneidmaschine in Scheiben zerteilt und anschließend an eine Verpackungseinrichtung übergeben, die eine bestimmte Anzahl der abgetrennten Scheiben gemeinsam in einer Verpackung verpackt. Die Anzahl der in einer Verpackung enthaltenen Scheiben richtet sich hierbei nach einer auf der Verpackung angegebenen Menge, wobei eine tatsächlich in der Verpackung enthaltene Menge des Lebensmittels lediglich innerhalb eines gesetzlich vorgegebenen Bereichs von der angegebenen Menge abweichen darf.

Als problematisch bei strangförmigen Lebensmitteln, insbesondere bei Fleischstücken, hat sich deren typischerweise ungleichmäßig geformte Oberfläche herausgestellt, aufgrund derer ein Abschneiden von Scheiben gleichen Gewichts bei konstanter Scheibendicke besonders erschwert ist. Eine Anpassung der Scheibendicke ist jedoch lediglich in relativ engen Grenzen akzeptiert, sodass die tatsächlich in der Verpackung enthaltene Menge häufig das angegebene Gewicht übersteigt, um eine Einhaltung der gesetzlichen Vorgaben zu wahren.

Um ein Abschneiden gleichgewichteter Scheiben bzw. gewichtsgenaue Portionen aus solchen Scheiben auch bei ungleichförmig geformten Lebensmitteln zu ermöglichen, sind deshalb Vorrichtungen zum Formen von Lebensmitteln bekannt, mittels derer das Lebensmittel in eine vorbestimmte Form pressbar ist, beispielsweise in die eines Quaders oder zumindest eines quaderähnlichen Volumens. Hierdurch kann sichergestellt werden, dass die abgetrennten Scheiben in einer Querschnittsfläche im Wesentlichen übereinstimmen, wodurch ein Abschneiden des geformten Lebensmittels bei ungefähr gleichbleibender Scheibendicke ermöglicht wird.

Eine vorstehend beschriebene Vorrichtung geht aus der EP 1 595 456 A2 hervor. Die Vorrichtung umfasst eine Presskammer, umfassend sechs Wandungen, von denen drei als bewegbare Pressstempel ausgebildet sind. Eine eine Grundplatte der Presskammer ausbildende Wandung ist fest verankert. Ebenso ist eine Rückseite der Presskammer als unbewegliche Wandung ausgebildet. Die zu formenden Lebensmittel werden der Presskammer mittels eines Förderbands zugeführt, wobei die Lebensmittel ausgehend von einer ersten Ebene mittels des Förderbands zu einem Randbereich des Förderbands befördert werden und anschließend auf die Grundplatte, welche vertikal unterhalb des Förderbands angeordnet ist, fallen. Vorgesehen ist dabei, dass zwei, mittels eines Trennteils voneinander getrennte Lebensmittel zeitgleich mittels der Vorrichtung geformt werden, indem die als Presstempel ausgebildeten Wandungen bewegt werden. Nach dem Formvorgang wird eine eine Seite ausbildende Wandung derart bewegt, dass ein Öffnungsquerschnitt der Presskammer freigegeben wird. Die beiden geformten Lebensmittel werden dann mittels einer Bewegung des gegenüberliegenden Pressstempels aus der Presskammer befördert.

Aus der DE 10 2016 122 126 A1 geht ebenfalls eine Vorrichtung zum Formen eines Lebensmittels hervor. Die Vorrichtung umfasst eine Presskammer mit zwei als Pressstempeln ausgebildeten Wandungen, mittels derer das Lebensmittel formbar ist. Das Lebensmittel wird der Presskammer hierbei mittels eines Transportbands, welches in einem Winkel zu einer Horizontalen ausgerichtet ist und eine erste Bewegungsrichtung aufweist, zugeführt. Daran anschließend erfolgt der Formvorgang. Um das Lebensmittel aus der Presskammer zu entfernen, wird eine eine Seite ausbildende Wandung bewegt, um einen Öffnungsquerschnitt freizugeben, während ein auf einer gegenüberliegenden Seite angeordneter Pressstempel bewegt wird, um das Lebensmittel aus der Presskammer zu befördern und an das Transportband zu übergeben, welches in eine - im Vergleich zur ersten Bewegungsrichtung - entgegengesetzte Bewegungsrichtung verläuft und ebenfalls in einem Winkel zur der Horizontalen ausgerichtet ist. Eine Zuführöffnung der Presskammer entspricht somit einer Abführöffnung der Presskammer.

Die DE 20 2005 018 374 U1 beschreibt eine Vorrichtung zum Formen eines Lebensmittels, die eine Presskammer sowie ein Transportband zur Zuführung des Lebensmittels in die Presskammer und aus dieser heraus aufweist. Hierzu weist die Vorrichtung ein Mittel zum Aufnehmen des Lebensmittels auf, das mit dem Transportband gekoppelt ist, sodass das Mittel bei einer Bewegung des Transportbands mitbewegt wird. Mittels des Transportbands wird das auf dem Mittel aufliegende Lebensmittel zu einer Presskammer befördert, die das Lebensmittel mittels ihrer Pressstempel formt. Nach dem Formvorgang wird das Lebensmittel durch das Mittel aus der Presskammer heraus gefördert.

Ferner ist aus der DE 2 140 585 A eine Vorrichtung zum Pressen von Fleischwaren, insbesondere Bauchspeck, mit einer Mehrzahl parallel zueinander ausgerichteter Walzen bekannt, die zwischen sich einen Pressspalt bilden, durch den die zu pressende Fleischware hindurch geführt wird. Als Fördereinrichtung wird dabei ein Transportband verwendet, auf dem die Fleischware aufliegt. Bei der vorbekannten Vorrichtung sind gegenüber liegende Walzenpaare so angeordnet, dass sich ein zwischen ihnen gebildeter Pressspalt in Vorschubrichtung zunehmend verkleinert. Eine Presskammer im Sinne einer Vorrichtung der dieser Anmeldung zugrunde liegenden Art, bei der das Lebensmittel während des Pressvorgangs stillsteht, ist nicht vorhanden. Auch funktioniert die vorbekannte Vorrichtung bei stillstehendem Transportband nicht, da ansonsten keine Weiterbewegung der Fleischware durch die Walzenpaare ermöglicht würde, eine solche Weiterbewegung aber zur Erzielung des Presseffekts unerlässlich ist. Bei stillstehendem Transportband müsste nämlich eine relative Gleitbewegung zwischen der Oberfläche des Transportbands und den oberen Presswalzen eintreten, was nicht durchführbar ist. Außerdem sind bei der aus der DE 2 140 585 A bekannten Vorrichtung sowohl die Gesamtheit der unteren Walzen als auch die Gesamtheit der oberen Walzen in jeweils einem gemeinsamen Rahmen zusammengefasst und gelagert, wobei dieser Rahmen parallel zu sich und senkrecht zu den Walzenachsen verschiebbar ist, oder um eine Walzenachse oder eine zu den Walzenachsen parallele Achse schwenkbar angeordnet ist. Darüber hinaus erfolgt eine Justierung der Spaltweite sowie des Eintritts sowie Austrittsquerschnitts für das Pressgut mittels eines Handrades, das aufgrund der angestrebten hohen Vorschubgeschwindigkeit der Vorrichtung nur vor Beginn des Pressvorgangs und nicht während desselbens bedient wird. Wandungen, die eine wie auch immer bei der DE 2 140 585 A zu definierende "Presskammer" begrenzen würden, sind weder vorhanden, noch mit dem Walzenprinzip dieses Standes der Technik und der Verstellbarkeit der Walzen kompatibel.

Übrigens offenbart das Dokument EP 3 542 979 A1 eine Vorrichtung und ein Verfahren zum Formen eines strangförmigen Lebensmittels mit den technischen Merkmalen der Oberbegriffe der unabhängigen Ansprüche 1 und 2.

### Aufgabe

Es ist Aufgabe der vorliegenden Erfindung, eine Vorrichtung zum Formen eines strangförmigen Lebensmittels zu entwickeln, welches sich zur Integration in ein Transportsystem eignet. Diese Aufgabe soll analog für ein Verfahren zum Formen eines Lebensmittels erfüllt werden.

### Lösung

Erfindungsgemäß wird die obengenannte Aufgabe durch die kennzeichnenden Merkmale der unabhängigen Ansprüche 1 und 2 gelöst.

Ausgehend von der eingangs genannten Vorrichtung wird die vorstehende Aufgabe durch eine Zuführeinrichtung, mittels derer das Lebensmittel der Presskammer durch einen ersten Öffnungsquerschnitt zuführbar ist und eine Abführeinrichtung, mittels derer das Lebensmittel durch einen zweiten Öffnungsquerschnitt aus der Presskammer abführbar ist, gelöst, wobei der erste Öffnungsquerschnitt dem zweiten Öffnungsquerschnitt gegenüberliegt, sodass das Lebensmittel vorzugsweise in dieselbe Richtung zuführbar und abführbar ist. Die Presskammer besteht aus sechs Wandungen, von denen vier als Presstempel ausgebildet und jeweils mittels einer zugehörigen Presseinrichtung in unterschiedliche Richtungen bewegbar sind.

Im Sinne dieser Anmeldung wird als "umschlossenes Volumen" ein Rauminhalt verstanden, der von einer beliebig geformten Oberfläche eingeschlossen ist, wobei zumindest Teile der einschließenden Oberfläche nicht notwendigerweise körperlich vorhanden sein müssen. Vielmehr kann die Oberfläche teilweise von Ebenen gebildet sein, die von einer gedanklichen Verlängerung bestehender Bauteile gebildet sind, wobei Schnitte derartiger Ebenen mit anderen, gedanklichen Ebenen einerseits oder den körperlichen Bauteilen andererseits das Volumen definieren.

Als "Ausgangszustand" der Presskammer wird im Sinne dieser Anmeldung ein Zustand der Presskammer verstanden, in dem die Presskammer zumindest derart dimensioniert ist, dass ein zu formendes Lebensmittel in der Presskammer platzierbar ist, ohne dass es bereits zu einer Verformung des Lebensmittels kommt. Vorzugsweise ist dabei vorgesehen, dass die Wandungen der Presskammer im Ausgangszustand beabstandet zu einer Oberfläche des Lebensmittels angeordnet sind. Ebenso ist jedoch auch vorstellbar, dass die Wandungen zumindest teilweise mit der Oberfläche des Lebensmittels in Kontakt stehen. Insbesondere liegt die Presskammer in ihrem Ausgangszustand nicht notwendigerweise in demjenigen Zustand vor, in welchem sie das größte Volumen einfasst. Der Ausgangszustand kann mithin abhängig von einem Volumen des zu formenden Lebensmittels sein.

Als "Endzustand" der Presskammer wird im Sinne dieser Anmeldung derjenige Zustand der Presskammer verstanden, in der die selbige derart mit dem zu formenden Lebensmittel in Kontakt steht, insbesondere Presskräfte auf dieses überträgt, wodurch das selbige in seinen geformten Zustand überführt wurde.

Ein Formvorgang, bei dem das Lebensmittel von einem ungeformten Zustand in einen geformten Zustand überführt wird, erfolgt mithin im Zuge einer Überführung der Presskammer von ihrem Ausgangszustand in ihren Endzustand.

Die erfindungsgemäße Vorrichtung hat viele Vorteile. Ein besonderer Vorteil der Vorrichtung besteht darin, dass die Vorrichtung einfach in ein bestehendes Transportsystem integriert werden kann. Letzteres umfasst typischerweise zumindest eine Vorrichtung zum Formen eines Lebensmittels sowie eine nachgeschaltete Schneidvorrichtung, mittels der das geformte Lebensmittel in Scheiben aufgeschnitten wird. Häufig schließt sich hieran eine Verpackungseinrichtung an, die die Scheiben für einen Endverbraucher verpackt. Die einzelnen Vorrichtungen weisen hierbei in aller Regel zumindest ein Transportband auf, welches jeweils in einem zugehörigen Innenraum angeordnet ist und das Lebensmittel innerhalb der Vorrichtung bewegt. Um eine Überführung des Lebensmittels von einer Vorrichtung zu einer nächsten zu ermöglichen, ist das Transportsystem häufig eine Mehrzahl von zwischen den Vorrichtungen verlaufenden Transportbändern versehen.

Dadurch, dass die Zuführung des ungeformten Lebensmittels in die Presskammer und die Abführung des mittels der Vorrichtung geformten Lebensmittels aus der Presskammer auf gegenüberliegenden Seiten der Presskammer - und somit vorzugsweise gegenüberliegenden Seiten der Vorrichtung - erfolgen, ist es besonders einfach, die Vorrichtung in ein vorstehend beschriebenes Transportsystem zu integrieren, bei dem die beiden Seiten an ein weiteres Transportband ankoppelbar sind.

Eine derartige Führung des Lebensmittels ermöglicht es darüber hinaus, den Durchsatz zu erhöhen, da der Vorrichtung eine Mehrzahl von zu formende Lebensmittel nacheinander zuführbar sind, ohne das ein bereits geformtes Lebensmittel zunächst aus der Vorrichtung entnommen werden muss, um der Vorrichtung ein weiteres Lebensmittel zuführen zu können. Die eingangs genannte Aufgabe wird ausgehend von einem Verfahren zum Formen eines strangförmigen Lebensmittels gemäß Anspruch 2 dadurch gelöst, dass die Zuführung des umgeformten Lebensmittels in die Presskammer und die Abführung des geformten Lebensmittels aus der Presskammer auf gegenüberliegenden Seiten der Presskammer erfolgen, vorzugsweise durch Bewegen des Lebensmittels in dieselbe Richtung, und dass die Presskammer aus sechs Wandungen besteht, von denen vier als Presstempel ausgebildet und jeweils mittels einer zugehörigen Presseinrichtung in unterschiedliche Richtungen bewegbar sind.

Das erfindungsgemäße Verfahren umfasst hierbei zunächst vier Schritte: In einem ersten Schritt wird eine von den Wandungen begrenzte Presskammer geöffnet, indem mindestens eine der Wände relativ zu mindestens einer anderen der Wände bewegt wird, wodurch ein Öffnungsquerschnitt freigegeben wird. In einem Ausgangszustand als auch in einem Endzustand umschließt die Presskammer das Lebensmittel. In einem zweiten Schritt wird das Lebensmittel durch den Öffnungsquerschnitt in die Presskammer eingeführt, vorzugsweise mittels der Zuführeinrichtung. In einem dritten Schritt wird der Öffnungsquerschnitt der Presskammer wieder geschlossen und das Lebensmittel durch Bewegung von als Presstempel ausgebildeten Wänden der Presskammer von einem ungeformten Zustand in einen geformten Zustand überführt. Die Presskammer liegt mithin in ihrem Endzustand vor. In einem vierten Schritt wird ein Öffnungsquerschnitt der Presskammer freigegeben und das geformte Lebensmittel durch diesen Öffnungsquerschnitt aus der Presskammer abgeführt. Vorzugsweise erfolgt die Abführung des Lebensmittels mittels der Abführeinrichtung.

Die in Bezug auf die erfindungsgemäße Vorrichtung genannten Vorteile werden dabei analog mittels des vorbeschriebenen Verfahrens erzielt.

Gemäß einer vorzugsweisen Ausgestaltung der Erfindung ist vorgesehen, dass das ungeformte Lebensmittel der Presskammer mittels eines Transportbandes zugeführt wird, das sich vorzugsweise in die Presskammer hinein erstreckt und weiter vorzugsweise eine Wand der Presskammer zumindest teilweise bedeckt und noch weiter vorzugsweise eine Wand der Presskammer umläuft.

Vorteilhafter Weise ist das Lebensmittel der Vorrichtung besonders einfach und schnell zuführbar. Sofern das Transportband die Wand der Presskammer umläuft, kann das Lebensmittel direkt in die Presskammer eingebracht werden, wobei eine Wandung der Presskammer auch während eines Pressvorgangs von dem Transportband bedeckt ist. Dabei ist vorgesehen, dass die Wandung dazu dient, das Lebensmittel gegen von einem Presstempel der Presskammer ausgeübte Presskräfte abzustützen. Vorzugsweise ist die Wandung hierbei unbeweglich, sodass das Lebensmittel mittels des Pressstempels verformt wird.

Analog ist gemäß einer vorzugsweisen Ausgestaltung der Erfindung ist vorgesehen, dass das geformte Lebensmittel aus der Presskammer mittels eines Transportbandes abgeführt wird, das sich vorzugsweise in die Presskammer hinein erstreckt und weiter vorzugsweise eine Wand der Presskammer zumindest teilweise bedeckt und noch weiter vorzugsweise eine Wand der Presskammer umläuft.

Gemäß einer besonders bevorzugten Ausgestaltung der Erfindung ist vorgesehen, dass die Zuführung des ungeformten Lebensmittels in die Presskammer und die Abführung des geformten Lebensmittels aus der Presskammer mittels desselben Transportbandes erfolgen.

Bei Verwendung eines einzigen Transportbands lässt sich das Lebensmittel besonders einfach und schnell der Presskammer zuführen und aus dieser abführen. Dies liegt insbesondere darin begründet, dass keine weiteren Mittel zur Übergabe des Lebensmittels an die Presskammer erforderlich sind. Auch muss mithin nicht sichergestellt werden, dass eine Übergabe des Lebensmittels von einem Transportband auf daran anschließendes Transportband störungsfrei verläuft. Vielmehr muss das Lebensmittel lediglich auf dem Transportband abgelegt werden.

Eine weitere vorzugsweise Ausgestaltung der Erfindung sieht vor, dass eine Temperatur des Lebensmittels zumindest in Randbereichen geringer ist als eine Temperatur des Lebensmittels in einem Kernbereich.

Es hat sich herausgestellt, dass eine mittels des Formvorgangs erhaltene Form des Lebensmittels hierdurch vorteilhafter Weise länger erhalten bleibt, sodass das Lebensmittel bei Erreichen einer nachgeordneten Schneidmaschine weiterhin in einem geformten Zustand vorliegt und gleichwohl mit konventionellen Schneidmaschinen aufgeschnitten werden kann. Vorzugsweise ist hierbei vorgesehen, dass die Temperatur des Lebensmittels in den Randbereichen unter 0°C liegt. Insbesondere wird eine Rückstellkraft des Lebensmittels, welche dafür sorgt, dass das Lebensmittel in seinen ungeformten Zustand zurückkehrt, hierdurch reduziert.

Eine vorzugsweise Ausgestaltung der Erfindung sieht vor, dass mindestens eine als Pressstempel ausgebildete Wandung während des Einführens des Lebensmittels in die Presskammer senkrecht und/oder parallel zu einer Bewegungsrichtung des Lebensmittels, in der das Lebensmittel der Presskammer zugeführt wird, vorzugsweise in Bewegungsrichtung oder senkrecht dazu, bewegt wird, sodass ein Abstand zwischen der Wandung und einer gegenüberliegenden Wandung der Presskammer verringert wird.

Auf diese Weise lässt sich die Presskammer in ihrer Größe bereits vor einer endgültigen Positionierung des Lebensmittels in der Presskammer an das Lebensmittel anpassen. Vorteilhafter Weise lässt sich der Zeitaufwand zum Formen eines Lebensmittels hierdurch reduzieren, da Verfahrwege der Pressstempel in einem anschließenden Formvorgang reduziert sind. Vorzugsweise ist dabei eine Lichtschranke vorgesehen, die eine Länge des Lebensmittels bestimmt. Mittels der bestimmten Länge kann der Abstand zwischen den gegenüberliegenden Wandungen derart angepasst werden, dass diese der Länge des Lebensmittels im Wesentlichen entspricht, vorzugsweise etwas übersteigt, sodass das Lebensmittel zwischen den Wandungen angeordnet werden und schließlich geformt kann.

Vorzugsweise ist die Presskammer, und zwar weiter vorzugsweise in sämtlichen drei senkrecht aufeinander stehenden Raumrichtungen, von (jeweils) paarweise parallel zueinander ausgerichteten Wandungen begrenzt.

### Ausführungsbeispiel:

Die vorstehend beschriebene Erfindung wird nachfolgend anhand eines Ausführungsbeispiels, das in den Figuren dargestellt ist, näher erläutert.

Es zeigt:
- Figur 1:: eine perspektivische Ansicht einer erfindungsgemäßen Vorrichtung,
- Figur 2:: einen vertikalen Schnitt durch die Vorrichtung aus Figur 1,
- Figur 2a:: wie Figur 2, wobei ein Öffnungsquerschnitt einer Presskammer kenntlich gemacht ist,
- Figur 3:: wie Figur 2, wobei ein Pressstempel der Presskammer verschoben ist,
- Figur 4:: wie Figur 3, wobei ein weiterer Pressstempel verschoben ist,
- Figur 5:: einen weiteren vertikalen Schnitt durch die Vorrichtung aus Figur 1,
- Figur 6:: wie Figur 5, wobei ein weiterer Presstempel verschoben ist,
- Figur 7:: eine schematische Darstellung eines Lebensmittels in einem ungeformten Zustand und
- Figur 8:: wie Figur 7, wobei das Lebensmittel in einem geformten Zustand vorliegt.

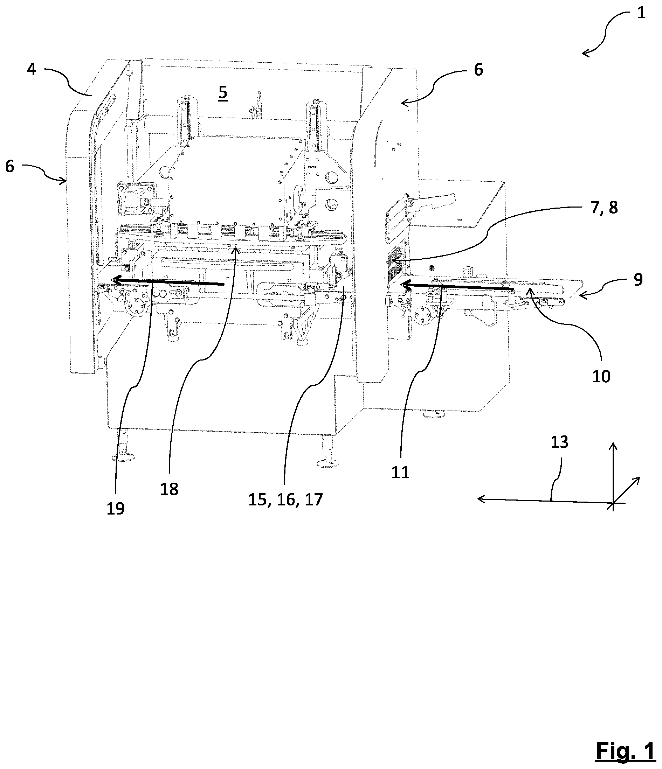

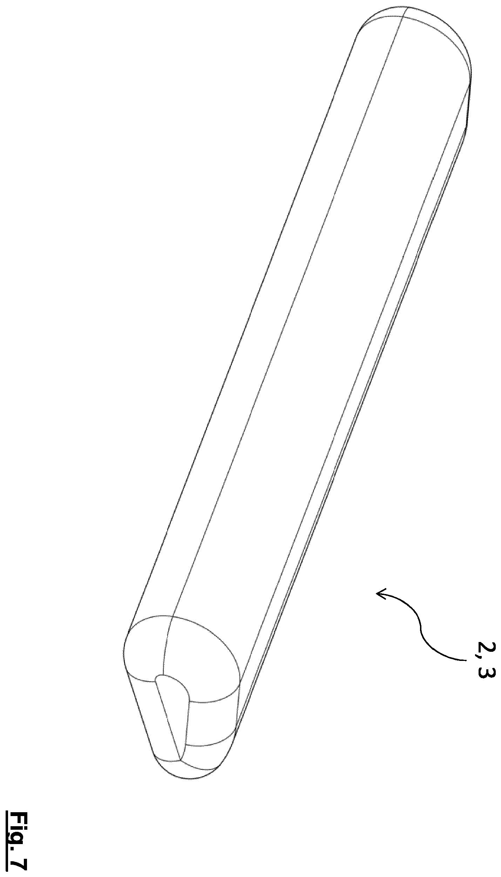

Ein Ausführungsbeispiel, das in den Figuren 1 bis 6 dargestellt ist, umfasst eine erfindungsgemäße Vorrichtung 1 zum Formen eines strangförmigen Lebensmittels 2 in Form eines Fleischstücks 3, wobei das Fleischstück 3 eine ungleichmäßige Oberflächenkontur aufweist, die mittels der Vorrichtung 1 korrigiert werden soll. Das Fleischstück 3 in einem ungeformten Zustand ist in Figur 7 dargestellt.

Die erfindungsgemäße Vorrichtung 1 umfasst ein Gehäuse 4, das einen Innenraum 5 einschließt und welches an zwei gegenüberliegenden Seitenwänden 6 jeweils mit einer verschließbaren Öffnung 7 versehen ist. Die Öffnungen 7 bilden eine Zuführöffnung 8 und eine Abführöffnung aus, wobei lediglich die Zuführöffnung 8 in den Figuren dargestellt ist. An den Öffnungen 7 ist jeweils ein Transportband 9, angeordnet, wobei lediglich das der Zuführöffnung 8 zugehörige Transportband 9 in den Figuren dargestellt ist. Das Transportband 9 ist hierbei zur erstmaligen Platzierung des Lebensmittels 2 vorgesehen. Um hierbei eine für einen anschließenden Form- und Schneidvorgang geeignete Positionierung des Lebensmittels 2 auf dem Transportband 9 zu gewährleisten, ist die Vorrichtung 1 mit einer stillstehenden Positionierungseinrichtung 10 in Form einer Führungsschiene versehen, die das aufgelegte Lebensmittel 2 in eine Ausgangsposition überführt, in der das selbige mittig auf dem Transportband 9 aufliegt. Eine Bewegungsrichtung 11 des Transportbands 9 ist hierbei parallel zu einer Vorderseite 12 der Vorrichtung 1 ausgerichtet, wobei die Bewegungsrichtung 11 des Transportbands 9 eine X-Richtung 13 definiert. Beim Auflegen des Lebensmittels 2 auf das Transportband 9 wird das Lebensmittel 2 in X-Richtung 13 zu der Zuführöffnung 8 gefördert. Für den Fall, dass das Lebensmittel 2 hierbei nicht bereits mittig - bezogen auf eine Breite 14 des Transportbands 9 betrachtet - auf dem Transportband 9 aufliegt, erfolgt eine Korrektur der Position mittels der Positionierungseinrichtung 10, indem das Lebensmittel 2 während der Bewegung entlang der Positionierungsrichtung 10 gleitet und hierbei quer zur Bewegungsrichtung 11 verschoben und ausgerichtet wird. Eine Lage der Positionierungseinrichtung 10 relativ zu dem Transportband 9 ist einstellbar, sodass die Position des Lebensmittels 2 in Abhängigkeit einer Breite des selbigen korrigierbar ist.

Darüber hinaus weist die erfindungsgemäße Vorrichtung 1 eine Zuführeinrichtung 15 als auch eine Abführeinrichtung 16 in Form eines einzigen, durch den Innenraum 5 der Vorrichtung 1 hindurch verlaufenden, Transportbands 17 auf, wobei das strangförmige Lebensmittel 2 mittels des Transportbands 17 einer im Innenraum 5 der Vorrichtung 1 angeordneten Presskammer 18 zuführbar und aus der Presskammer 18 abführbar ist. Eine Bewegungsrichtung 19 des Transportbands 17 verläuft hierbei ebenfalls in X-Richtung 13.

Mittels des dritten Transportbands, welches an der Abführöffnung angeordnet ist, ist das Lebensmittel 2 zu einer ebenfalls nicht in den Figuren gezeigten Schneideinrichtung beförderbar, die das geformte Lebensmittel 2 in Scheiben zerteilt.

Das Lebensmittel 2 wird ausgehend von dem ersten Transportband 9 an das zweite Transportband 17 übergeben, von welchem das Lebensmittel 2 an das letzte Transportband übergeben wird, wobei eine jeweilige Breite 14 der Transportbänder 9, 17 übereinstimmt. Das erste Transportband 9 erstreckt sich hierbei teilweise in den Innenraum 5 der Vorrichtung 1 hinein, sodass eine Übergabe des Lebensmittels 2 im Innenraum 5 der Vorrichtung 1 erfolgt. Eine Zuführung des Lebensmittels 2 in die Presskammer 18 und eine Abführung des selbigen erfolgen somit auf zwei gegenüberliegenden Seiten der Presskammer 18. Dabei wird das Lebensmittel 2 fortwährend in X-Richtung 13 bewegt, sodass die Ausgangsposition des Lebensmittels 2 - relativ zu der Breite der Transportbänder 9, 17 - mit einer Endposition des selbigen nach Durchlaufen der Vorrichtung 1 überein, sodass die Ausgangsposition im Wesentlichen auch für die anschließende Schneideinrichtung bereits beim Auflegen auf das erste Transportband 9 vorgebbar ist. Sämtliche drei Transportbänder verlaufen in horizontale Richtung und Oberflächen der Obertrume befinden sich auf demselben Niveau in Z-Richtung betrachtet.

Erfindungsgemäß ist im Innenraum 5 der Vorrichtung 1 die Presskammer 18 bestehend aus sechs Wandungen 20 angeordnet, von denen vier als Presstempel 28, 29, 30, 31 ausgebildet und jeweils mittels einer zugehörigen Presseinrichtung 21, 22, 23, 24 in unterschiedliche Richtungen bewegbar sind. Eine eine Vorderseite 25 der Presskammer 18 ausbildende sowie eine einen Boden 26 der Presskammer 18 ausbildende Wandung 20 sind hierbei fest mit der Vorrichtung 1 und deren Maschinengestell verbunden, während die übrigen Wandungen 20 bewegbare Pressstempel 28, 29, 30, 31 ausbilden, die jeweils in eine Richtung relativ dem Maschinengestell und zu dem Lebensmittel 2 verschiebbar sind. Hierzu sind die Pressstempel 28, 29, 30, 31 jeweils mit einer Presseinrichtung 21, 22, 23, 24 jeweils in Form eines elektromechanischen Zylinders, der durch einen Servomotor angetrieben wird gekoppelt. Mittels der Presseinrichtungen 21, 22, 23, 24 erfolgt eine druckgesteuerte Bewegung der zugehörigen Pressstempel 28, 29, 30, 31, wobei die Bewegung bei Erreichen eines vorgegebenen Enddrucks automatisch beendet wird. Eine Dicke der die Vorderseite 25 der Presskammer 18 ausbildenden Wandung 20 ist hierbei zur Anpassung an einen Schneidquerschnitt der Vorrichtung 1 verstellbar ausgebildet, sodass die Presskammer 18 an eine Breite des zu formenden Lebensmittels 2 anpassbar ist.

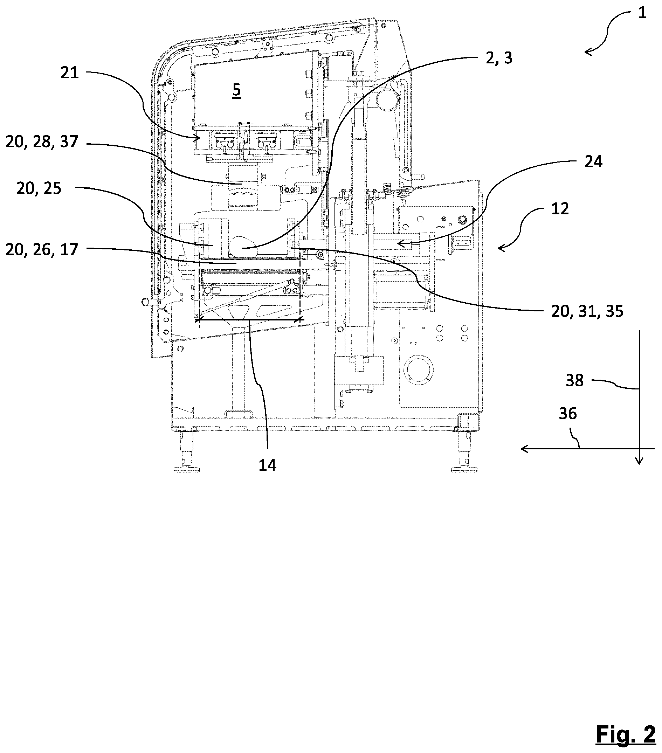

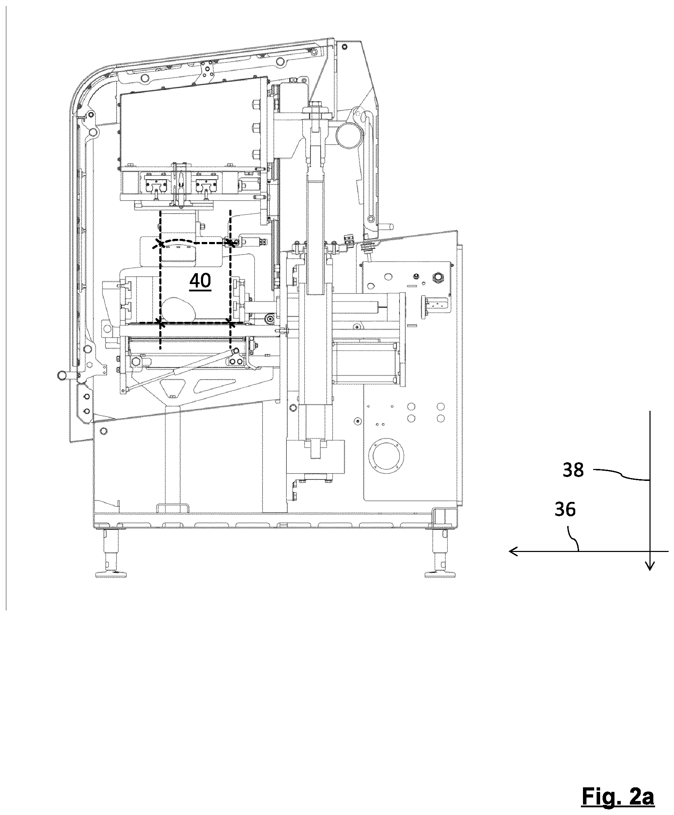

Die den Boden 26 der Presskammer 18 bildende Wandung 20 ist hierbei fest in dem Maschinengestell gelagert und mit dem zweiten Transportband 17 bedeckt, wobei der Boden 26 zwischen einem Obertrum 32 und einem Untertrum 33 des zweiten Transportbands 17 eingeschlossen ist. Eine Breite 14 des zweiten Transportbands 17 ist hierbei größer ausgebildet als eine quer zu der Bewegungseinrichtung 11 des Transportbands 17 gemessene Breite 34 der Presskammer 18 in einem Endzustand, welcher im Zusammenhang mit den Figuren 2 bis 6 im Detail beschrieben wird. Der Boden 26 der Presskammer 18 wird mithin vollständig von dem Transportband 17 bedeckt, sodass während des Formvorgangs in Z-Richtung in das Lebensmittel 2 eingeleitete Presskräfte von dem Lebensmittel 2 über das Transportband 17 in den Boden 26 übertragen werden.

Der eine Rückseite 35 der Presskammer 18 ausbildende, vierte Pressstempel 31 ist in eine senkrecht zur X-Richtung 13 verlaufende Y-Richtung 36 bewegbar, wobei der eine Oberseite 37 der Presskammer 18 bildende, erste Pressstempel 28 in eine Z-Richtung 38 bewegbar ist, die senkrecht zur X-Richtung 13 und zur Y-Richtung 36 ausgerichtet ist. Dabei ist die Oberseite 37 der Presskammer 18 in einem vertikalen Querschnitt betrachtet kreisbogenförmig ausgebildet. Die beiden übrigen Seiten 27 der Presskammer 18 ausbildenden zweiten und dritten Pressstempel 29, 30, sind in die X-Richtung 13 beziehungsweise entgegen der X-Richtung 13 bewegbar, wobei die selbigen mit ihren Presseinrichtungen 22, 23 derart mit dem ersten Pressstempel 28 und dessen zugehöriger Presseinrichtung 21 gekoppelt sind, dass sich diese bei einer Bewegung der Oberseite 37 in Z-Richtung 36 mitbewegen. Ferner weist der jeweilige Pressstempel 29, 30 ein Kontaktelement 42 auf, welches an einem dem Lebensmittel 2 zugewandte Ende angeordnet ist. Das Kontaktelement 42 bildet in dem Endzustand der Presskammer 18 eine Kontaktfläche aus, die mit dem Lebensmittel 2 in Kontakt steht. Die jeweilige Kontaktfläche 41 des zweiten und dritten Pressstempels 29, 30 ist hierbei in ihrer Größe veränderbar ausgebildet. Dabei ist das Kontaktelement 42 als umgekantetes Blech ausgebildet, welches mittels einer Feder bewegbar an dem jeweiligen Pressstempel 29, 30 einerseits und fest an dem ersten Pressstempel 28 andererseits befestigt ist, sodass eine Relativbewegung zwischen dem jeweiligen Pressstempel 29, 30 und dem ersten Pressstempel 28 ermöglicht ist. Der erste Pressstempel 28 ist mit seiner Presseinrichtung 21 hierbei jeweils mittels einer Linearführung mit dem zweiten und dritten Pressstempel 29, 30 und der zugehörigen Presseinrichtung 22, 23 gekoppelt. In dem Ausgangszustand der Presskammer 18 wird die Feder schwerkraftbedingt durch den jeweiligen Pressstempel 29, 30 derart ausgelenkt, dass ein Abschnitt des Kontaktelements 42 über eine Oberfläche des jeweiligen Pressstempels 29, 30 hervorsteht. In einem Ausgangszustand der Presskammer 18, welcher in Figur 2 dargestellt ist, weist die selbige ein erstes umschlossenes Volumen auf, wobei der Ausgangszustand dann vorliegt, wenn die Pressstempel 28, 29, 30, 31 derart zurückgezogen sind, dass eine Zuführung des Lebensmittels 2 in die Presskammer 18 ermöglicht wird. Das von der Presskammer 18 umschlossene Volumen wird hierbei von Ebenen eingeschlossen, die einer gedanklichen Verlängerung der Wandungen 20 der Presskammer 18 entsprechen.

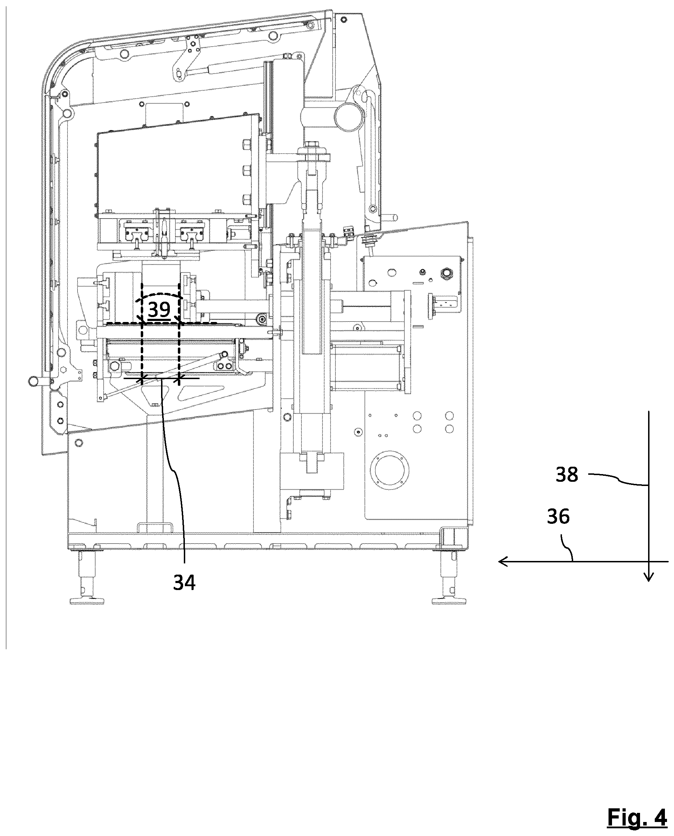

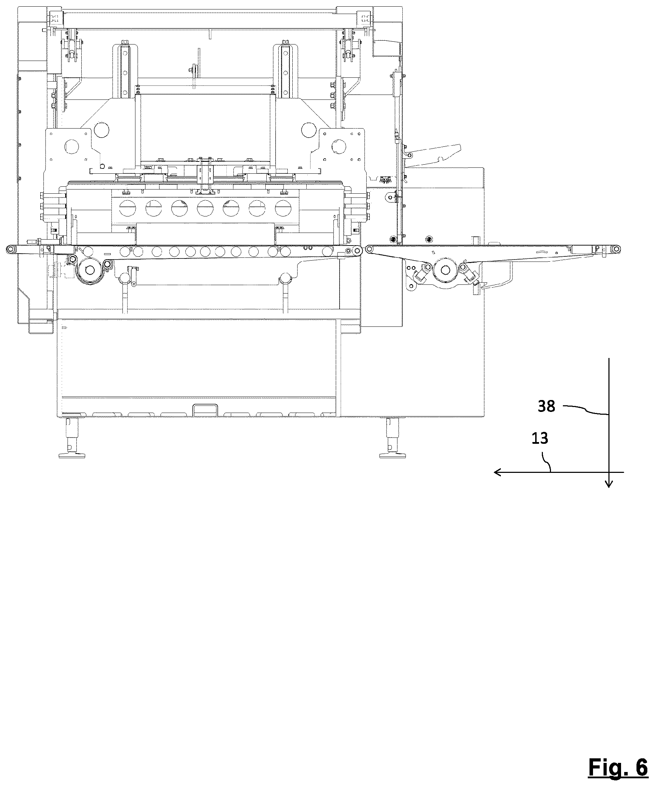

Infolge einer translatorischen Verschiebung der vier Pressstempel 28, 29, 30, 31 lässt sich die Presskammer 18 von ihrem Ausgangszustand in einen Endzustand überführen, bei der die selbige ein zweites umschlossenes Volumen aufweist. Dabei werden die als Pressstempel 28, 29, 30, 31 ausgebildeten Wandungen 20 der Presskammer 18, die insgesamt eine "Halbkammer" ausbilden, relativ zu dem Lebensmittel 2 bewegt. Der Endzustand der Presskammer ist in den Figuren 4 und 6 gezeigt.

Zum Formen des Lebensmittels 2 wird die Presskammer 18 zunächst in ihren Ausgangszustand überführt, indem die Presskammer 18 geöffnet wird. Hierzu wird der erste Pressstempel 28 der Presskammer 18 mit dem zweiten und dritten Pressstempel 29, 30 entgegen der Y-Richtung 36 bewegt, sodass ein Öffnungsquerschnitt 40 freigegeben wird, welcher gut in der Figur 2a erkennbar ist. Der Öffnungsquerschnitt 40 der Presskammer 18 übersteigt hierbei einen Querschnitt des Lebensmittels 2, sodass das selbige der Presskammer 18 zuführbar ist.

Das Lebensmittel 2, welches zur besseren Formbarkeit derart temperiert wurde, dass eine Temperatur zumindest in Randbereichen des Lebensmittels 2 gegenüber einer Temperatur des Lebensmittels 2 in einem Kernbereich verringert ist, wird anschließend mittels des ersten Transportbands 9 in die Presskammer 18 eingeführt. Dabei ist das Lebensmittel 2 mittels der Positionierungseinrichtung 10 derart auf dem ersten Transportband 9 platziert worden, dass das selbige bei Einfuhr in die Presskammer 18 nah an der die Rückseite 35 ausbildenden Wandung 20 anliegt, wie in Figur 2 dargestellt ist. Im Zuge der Einführung des Lebensmittels 2 in den Innenraum 5 der Vorrichtung 1 erfolgt eine Längenmessung des Lebensmittels 2 mittels einer nicht in den Figuren dargestellten Lichtschranke.

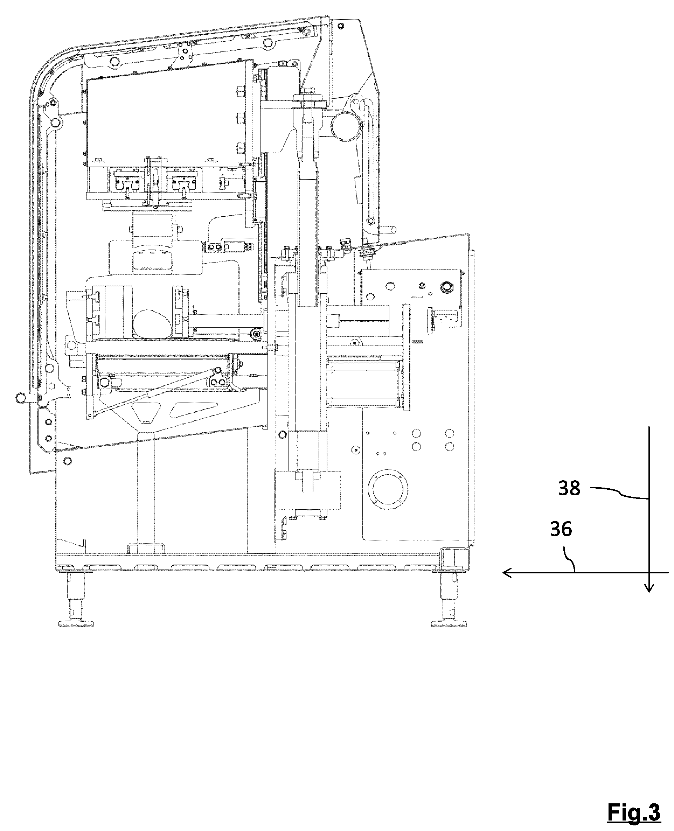

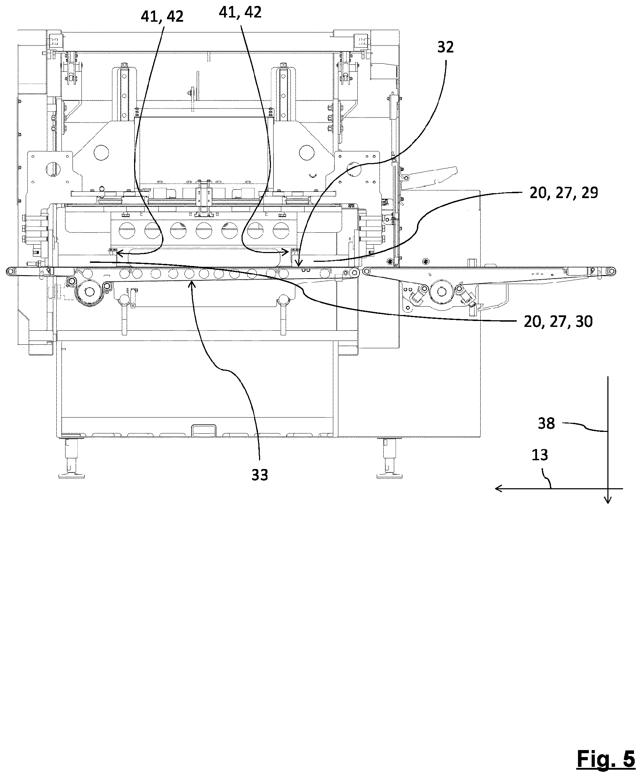

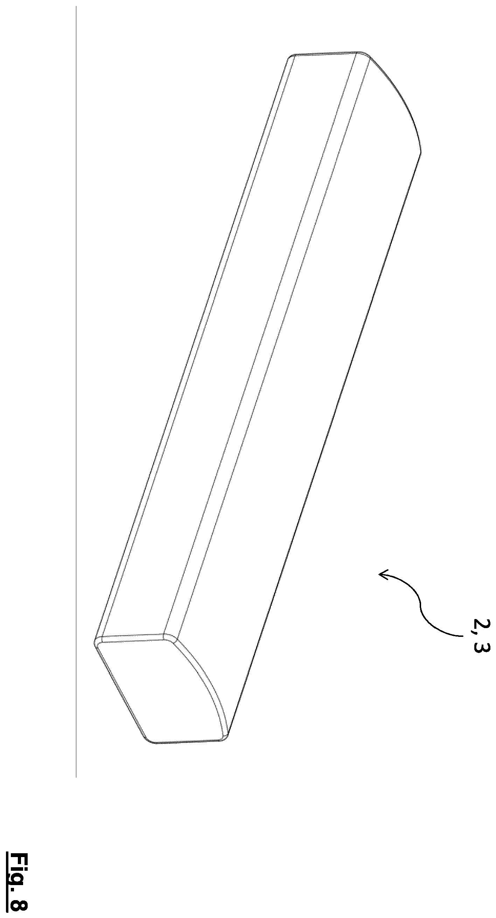

Sobald das Lebensmittel 2 mittig in Vorrichtung 1 angeordnet ist, wird die Zuführöffnung 8 mittels eines Verschließelements wieder geschlossen und das Lebensmittel an das zweite Transportband übergeben und relativ zu der Presskammer mittig zu dieser ausgerichtet. Hierbei werden der zweite und der dritte Pressstempel 29, 30 bereits in X-Richtung 13 und entgegen der X-Richtung 13 bewegt, sodass ein Abstand zwischen den beiden Pressstempeln 29, 30 derart verringert wird, dass dieser im Wesentlichen einer Länge des Lebensmittels 2 entspricht, diese vorzugsweise geringfügig übersteigt. Das zweite Förderband 17 wird angehalten. Anschließend wird - wie gut in der Figur 3 erkennbar ist - der die die Rückseite 35 der Presskammer 18 ausbildende Pressstempel 31 derart bewegt, dass dieser in Kontakt mit dem Lebensmittel 2 kommt. Infolge von Presskräften, welche von dem die Rückseite ausbildenden Pressstempel 31 auf das Lebensmittel 2 ausgeübt werden, entweicht das Lebensmittel 2 in die X-Richtung 36 sowie in die Z-Richtung 38. Analog wird der erste Pressstempel 28 mittels Bewegung desselbigen in Z-Richtung 38 mit dem Lebensmittel 2 in Kontakt gebracht wie gut anhand von Figur 4 erkennbar ist. Im Zuge der Bewegung des ersten Pressstempels 28 in Z-Richtung 38 kommt der Pressstempel 28 mit dem Lebensmittel 2 in Kontakt. Hierbei ist sind die Kontaktelement 42 zunächst noch ausgelenkt. Bei einer weiteren Druckausübung kommen der zweite und der dritte Pressstempel 29, 30 mit dem Transportband 17 in Kontakt. Die Linearführung in Verbindung mit der Feder ermöglicht es sodann, den ersten Pressstempel 28 weiter in Z-Richtung 38 zu verschieben, indem das Kontaktelement 42 in Z-Richtung 38 verschoben wird, sodass die Kontaktfläche 41 des jeweiligen Pressstempels 29, 30 hierbei in der Größe verkleinert wird. Das Lebensmittel 2 wird mithin in Z-Richtung 38 komprimiert wird, wodurch eine verstärkte Ausdehnung des Lebensmittels 2 in die X-Richtung 13 als auch entgegen der X-Richtung 13 herbeigeführt wird, während ein Querschnitt des Lebensmittels 2 parallel zu einer Y-Z-Ebene schon einem "Endquerschnitt" der Presskammer 18 entspricht. Ebenso werden die die Seiten 27 der Presskammer 18 bildenden Pressstempel 29, 30 in X-Richtung 13 beziehungsweise entgegen der X-Richtung 13 bewegt, um mit dem Lebensmittel 2 in Kontakt zu kommen, wie in den Figuren 5 und 6 zu erkennen ist. Die Presskammer 18 liegt mithin in ihrem Endzustand vor, in welchem alle Wandungen 20 der Presskammer 18 mit dem Lebensmittel 2 in Kontakt stehen und Presskräfte von den Pressstempeln 28, 29, 30, 31 in das Lebensmittel 2 eingeleitet werden. Das Lebensmittel 2, welches in einem Innenraum 39 der Presskammer 18 eingeschlossen ist, wird hierdurch in einen geformten Zustand überführt, welcher in der Figur 8 erkennbar ist und möglichst gut an einen Quader angenähert sein soll.

Anschließend werden die als Pressstempel 28, 29, 30, 31 ausgebildeten Wandungen 20 in umgekehrter Reihenfolge von dem Lebensmittel 2 entfernt, wobei das selbige im Wesentlichen in seinem geformten Zustand verbleibt.

Zuletzt wird das Lebensmittel 2 mittels des zweiten Transportbands 17 in X-Richtung 13 aus der Presskammer 18 und dem Innenraum 5 der Vorrichtung 1 heraus gefördert. Dabei wird der erste Pressstempel 28 der Presskammer 18 mit dem zweiten und dritten Pressstempel 29, 30 erneut entgegen der Y-Richtung 36 bewegt, sodass ein dem ersten Öffnungsquerschnitt 40 gegenüberliegender zweiter Öffnungsquerschnitt freigegeben wird, der einen Querschnitt des Lebensmittel 2 übersteigt, sodass das selbige aus der Presskammer 18 abführbar ist. Schließlich wird das Lebensmittel 2 an das dritte Transportband übergeben, mittels dessen das Lebensmittel 2 zu der Schneidmaschine transportierbar ist.

### Bezugszeichenliste:

- 1: Vorrichtung
- 2: Lebensmittel
- 3: Fleischstück
- 4: Gehäuse
- 5: Innenraum
- 6: Seitenwand
- 7: Öffnung
- 8: Zuführöffnung
- 9: erstes Transportband
- 10: Positionierungseinrichtung
- 11: Bewegungsrichtung
- 12: Vorderseite
- 13: X-Richtung
- 14: Breite
- 15: Zuführeinrichtung
- 16: Abführeinrichtung
- 17: Transportband
- 18: Presskammer
- 19: Bewegungsrichtung
- 20: Wandung
- 21: erste Presseinrichtung
- 22: zweite Presseinrichtung
- 23: dritte Presseinrichtung
- 24: vierte Presseinrichtung
- 25: Vorderseite
- 26: Boden
- 27: Seite
- 28: erster Pressstempel
- 29: zweiter Pressstempel
- 30: dritter Pressstempel
- 31: vierter Pressstempel
- 32: Obertrum
- 33: Untertrum
- 34: Breite
- 35: Rückseite
- 36: Y-Richtung
- 37: Oberseite
- 38: Z-Richtung
- 39: Innenraum
- 40: Öffnungsquerschnitt
- 41: Kontaktfläche
- 42: Kontaktelement

## Patentansprüche

1. Vorrichtung (1) zum Formen eines strangförmigen Lebensmittels (2), insbesondere eines Fleischstücks (3), mit einer Presskammer (18), die von Wandungen (20) begrenzt ist, von denen mindestens eine mittels einer Presseinrichtung (21, 22, 23, 24) bewegbar und als Pressstempel (28, 29, 30, 31) ausgebildet ist, wodurch die Presskammer (18) von einem Ausgangszustand mit einem ersten umschlossenen Volumen in einen Endzustand mit einem zweiten umschlossenen Volumen überführbar ist, wobei die Vorrichtung eine Zuführeinrichtung (15) aufweist, mittels derer das Lebensmittel (2) der Presskammer (18) durch einen ersten Öffnungsquerschnitt zuführbar (40) ist und eine Abführeinrichtung (16) aufweist, mittels derer das Lebensmittel (2) durch einen zweiten Öffnungsquerschnitt aus der Presskammer (18) abführbar ist, wobei der erste Öffnungsquerschnitt (40) dem zweiten Öffnungsquerschnitt gegenüberliegt, sodass das Lebensmittel (2) vorzugsweise in dieselbe Richtung zuführbar und abführbar ist,
**dadurch gekennzeichnet, dass**
die Presskammer (18) aus sechs Wandungen (20) besteht, von denen vier als Presstempel (28, 29, 30, 31) ausgebildet und jeweils mittels einer zugehörigen Presseinrichtung (21, 22, 23, 24) in unterschiedliche Richtungen bewegbar sind.

2. Verfahren zum Formen eines strangförmigen Lebensmittels (2), insbesondere eines Fleischstücks (3), mit den folgenden Verfahrensschritten:
a) eine von Wandungen (20) begrenzte Presskammer (18) wird geöffnet, indem mindestens eine der Wandungen (20) relativ zu mindestens einer anderen der Wandungen (20) bewegt wird, wodurch ein Öffnungsquerschnitt (40) freigegeben wird,
b) das Lebensmittel (2) wird durch den Öffnungsquerschnitt (40) in die Presskammer (18) eingeführt,
c) der Öffnungsquerschnitt (40) der Presskammer (18) wird wieder geschlossen und das Lebensmittel (2) durch Bewegung von Wandungen (20) der Presskammer (18) von einem ungeformten Zustand in einen geformten Zustand überführt,
d) ein Öffnungsquerschnitt der Presskammer (18) wird freigegeben und das geformte Lebensmittel (2) durch diesen Öffnungsquerschnitt aus der Presskammer (18) abgeführt,
e) die Zuführung des umgeformten Lebensmittels (2) in die Presskammer (18) und die Abführung des geformten Lebensmittels (2) aus der Presskammer (18) erfolgen auf gegenüberliegenden Seiten (27) der Presskammer (18), vorzugsweise durch Bewegen des Lebensmittels (2) in dieselbe Richtung,
**dadurch gekennzeichnet, dass**
f) die Presskammer (18) aus sechs Wandungen (20) besteht, von denen vier als Presstempel (28, 29, 30, 31) ausgebildet und jeweils mittels einer zugehörigen Presseinrichtung (21, 22, 23, 24) in unterschiedliche Richtungen bewegbar sind.

3. Verfahren nach Anspruch 2, **dadurch gekennzeichnet, dass** das ungeformte Lebensmittel (2) der Presskammer (18) mittels eines Transportbandes (9) zugeführt wird, das sich vorzugsweise in die Presskammer (18) hinein erstreckt und weiter vorzugsweise eine Wandung (20) der Presskammer (18) zumindest teilweise bedeckt und noch weiter vorzugsweise eine Wandung (20) der Presskammer (18) umläuft.

4. Verfahren nach Anspruch 2 oder 3, **dadurch gekennzeichnet, dass** das geformte Lebensmittel (2) aus der Presskammer (18) mittels eines Transportbandes abgeführt wird, das sich vorzugsweise in die Presskammer (18) hinein erstreckt und weiter vorzugsweise eine Wandung (20) der Presskammer (18) zumindest teilweise bedeckt und noch weiter vorzugsweise eine Wandung (20) der Presskammer (18) umläuft.

5. Verfahren nach einem der Ansprüche 2 bis 4, **dadurch gekennzeichnet, dass** die Zuführung des ungeformten Lebensmittels (2) in die Presskammer (18) und die Abführung des geformten Lebensmittels (2) aus der Presskammer (18) mittels desselben Transportbandes (17) erfolgen.

6. Verfahren nach einem der Ansprüche 2 bis 5, **dadurch gekennzeichnet, dass** eine Temperatur des Lebensmittels (2) zumindest in Randbereichen geringer ist als eine Temperatur des Lebensmittels (2) in einem Kernbereich.

7. Verfahren nach einem der Ansprüche 2 bis 6, **dadurch gekennzeichnet, dass** mindestens eine als Pressstempel (29, 30) ausgebildete Wandung (20) während des Einführens des Lebensmittels (2) in die Presskammer (18) senkrecht und/oder parallel zu einer Bewegungsrichtung (19) des Lebensmittels (2), in der das Lebensmittel (2) der Presskammer (18) zugeführt wird, vorzugsweise in Bewegungsrichtung (19) oder senkrecht dazu, bewegt wird, sodass ein Abstand zwischen der Wandung (20) und einer gegenüberliegenden Wandung (20) der Presskammer (18) verringert wird.

## Claims

1. Device (1) for forming a strand-shaped foodstuff (2), in particular, a piece of meat (3), comprising a pressing chamber (18) delimited by walls (20), at least one of which is moveable by means of a pressing device (21, 22, 23, 24) and is designed as a press punch (28, 29, 30, 31), whereby the pressing chamber (18) can be transferred from an initial state with a first enclosed volume to a final state with a second enclosed volume, wherein the device comprises a feeding device (15) by means of which the foodstuff (2) can be fed into the pressing chamber (18) through a first opening cross-section (40) and comprises a discharge device (16) by means of which the foodstuff (2) can be discharged from the pressing chamber (18) through a second opening cross-section, wherein the first opening cross-section (40) is opposite the second opening cross-section so that the foodstuff (2) can preferably be fed in the same direction and is dischargeable,
**characterized in that**
the pressing chamber (18) consists of six walls (20), four of which are designed as press punches (28, 29, 30,31) and can be moved in different directions by means of an associated pressing device (21, 22, 23, 24).

2. A method for forming a stranded foodstuff (2), in particular, a piece of meat (3), comprising the following steps:
a) a pressing chamber (18) delimited by walls (20) is opened by moving at least one of the walls (20) relative to at least one other of the walls (20), thereby releasing an opening cross-section (40),
b) the foodstuff (2) is inserted through the opening cross-section (40) into the pressing chamber (18),
c) the opening cross-section (40) of the pressing chamber (18) is closed again and the foodstuff (2) is transferred from an unformed state into a formed state by moving walls (20) of the pressing chamber (18),
d) an opening cross-section of the pressing chamber (18) is released, and the shaped foodstuff (2) is discharged from the pressing chamber (18) through this opening cross-section,
e) the feeding of the formed foodstuff (2) into the pressing chamber (18) and the discharge of the moulded foodstuff (2) from the pressing chamber (18) takes place on opposite sides (27) of the pressing chamber (18), preferably by moving the foodstuff (2) in the same direction,
**characterized in that**
f) the pressing chamber (18) consists of six walls (20), four of which are designed as press punches (28, 29, 30, 31) and can each be moved in different directions by means of an associated pressing device (21, 22, 23, 24).

3. The method according to Claim 2, **characterized in that** the unformed foodstuff (2) is fed into the pressing chamber (18) by means of a conveyor belt (9) which preferably extends into the pressing chamber (18) and, being furthermore preferred, covers at least partially a wall (20) of the pressing chamber (18) and, being furthermore preferred, runs around a wall (20) of the pressing chamber (18).

4. The method according to Claim 2 or 3, **characterized in that** the formed foodstuff (2) is discharged from the pressing chamber (18) by means of a conveyor belt preferably extending into the pressing chamber (18) and, being furthermore preferred, at least partially covering a wall (20) of the pressing chamber (18) and, being even furthermore preferred, running around a wall (20) of the pressing chamber (18).

5. The method according to any one of the Claims 2 to 4, **characterized in that** the feeding of the unformed foodstuff (2) into the press chamber (18) and the discharge of the formed foodstuff (2) from the press chamber (18) are carried out by means of the same conveyor belt (17).

6. The method according to any one of the Claims 2 to 5, **characterized in that** a temperature of the foodstuff (2) is lower than a temperature of the foodstuff (2) in a core region, at least in edge regions.

7. The method according to any one of the Claims 2 to 6, **characterized in that**, during the insertion of the foodstuff (2) into the pressing chamber (18) at least one wall (20) formed as a press punch (29, 30) is moved perpendicular to and/or parallel to a direction of movement (19) of the foodstuff (2) in which the foodstuff (2) is fed to the pressing chamber (18), preferably in the direction of movement (19) or perpendicular to it, so that a distance between the wall (20) and an opposite wall (20) of the pressing chamber (18) is reduced.

## Revendications

1. Dispositif (1) destiné à former une denrée alimentaire en forme de boudin (2) en particulier une pièce de viande (3), avec une chambre de pressage (18), qui est limitée par des parois (20) desquelles au moins une est constituée mobile au moyen d'un dispositif de pressage (21, 22, 23, 24)et sous la forme d'un piston de presse (28, 29, 30, 31), la chambre de pressage (18) pouvant être transférée d'un état initial avec un premier volume confiné à un état final avec un deuxième volume confiné, sachant que le dispositif comporte un système d'alimentation (15) au moyen duquel la denrée alimentaire (2) peut être acheminée (40) à la chambre de pressage (18) par une première section d'ouverture et comporte un système d'évacuation (16), au moyen duquel la denrée alimentaire (2) peut être évacuée par une deuxième section d'ouverture hors de la chambre de pressage (18), sachant que la première section d'ouverture (40) est opposée à la deuxième section d'ouverture de telle manière que la denrée alimentaire (2) peut être acheminée et évacuée de préférence dans la même direction,
***caractérisé en ce que***
la chambre de pressage (18) est composée de six parois (20) dont quatre sont constituées sous la forme de pistons de presse (28, 29, 30, 31) et peuvent être respectivement déplacées dans des directions différentes au moyen d'un système de pressage correspondant (21, 22, 23, 24).

2. Procédé destiné à former une denrée alimentaire en forme de boudin (2), en particulier une pièce de viande (3), avec les étapes de procédé suivantes :
a) une chambre de pressage (18) délimitée par des parois (20) est ouverte dans laquelle au moins une des parois (20) est déplacée par rapport à au moins une autre des parois (20), une section d'ouverture (40) étant de ce fait libérée,
b) la denrée alimentaire (2) est introduite par la section d'ouverture (40) dans la chambre de pressage (18),
c) la section d'ouverture (40) de la chambre de pressage (18) est à nouveau fermée et la denrée alimentaire (2) est transférée par le déplacement des parois (20) de la chambre de pressage (18) d'un état non formé à un état formé,
d) une section d'ouverture de la chambre de pressage (18) est libérée et la denrée alimentaire (2) formée est évacuée par cette section d'ouverture hors de la chambre de pressage (18),
e) l'acheminement de la denrée alimentaire (2) non formée dans la chambre de pressage (18) et l'évacuation de la denrée alimentaire (2) formée hors de la chambre de pressage (18) ont lieu sur les côtés opposés (27) de la chambre de pressage (18), de préférence par déplacement de la denrée alimentaire (2) dans la même direction,
***caractérisé en ce que***
f) la chambre de pressage (18) est composée de six parois (20) dont quatre sont constituées sous la forme de pistons de presse (28, 29, 30, 31) et peuvent être respectivement déplacées dans des directions différentes au moyen d'un système de pressage correspondant (21, 22, 23, 24).

3. Procédé selon la revendication 2, ***caractérisé en ce que*** la denrée alimentaire (2) non formée est acheminée à la chambre de pressage (18) au moyen d'une bande transporteuse (9), qui s'étend de préférence dans la chambre de pressage (18) et couvre en plus de préférence au moins en partie une paroi (20) de la chambre de pressage (18) et encore en plus tourne de préférence autour d'une paroi (20) de la chambre de pressage (18).

4. Procédé selon la revendication 2 ou 3, ***caractérisé en ce que*** la denrée alimentaire (2) formée est évacuée de la chambre de pressage (18) au moyen d'une bande transporteuse, qui s'étend de préférence dans la chambre de pressage (18) et couvre en plus de préférence au moins en partie une paroi (20) de la chambre de pressage (18) et encore en plus tourne de préférence autour d'une paroi (20) de la chambre de pressage (18).

5. Procédé selon l'une quelconque des revendications 2 à *4, **caractérisé en ce que*** l'acheminement de la denrée alimentaire (2) non formée (2) dans la chambre de pressage (18) et l'évacuation de la denrée alimentaire (2) formée de la chambre de pressage (18) ont lieu au moyen de la même bande transporteuse (17).

6. Procédé selon l'une quelconque des revendications 2 à *5,* ***caractérisé en ce* qu'**une température de la denrée alimentaire (2) est au moins dans les zones de bord plus faible qu'une température de la denrée alimentaire (2) dans une zone centrale.

7. Procédé selon l'une quelconque des revendications 2 à *6,* ***caractérisé en ce* qu'**au moins une paroi (20) constituée sous la forme d'un piston de presse (29, 30) est déplacée pendant l'introduction de la denrée alimentaire (2) dans la chambre de pressage (18) perpendiculairement et/ou parallèlement à un sens de déplacement (19) de la denrée alimentaire (2), dans lequel la denrée alimentaire (2) est acheminée à la chambre de pressage (18), de préférence dans le sens de déplacement (19) ou perpendiculairement à celui-ci de telle manière qu'une distance entre la paroi (20) et une paroi opposée (20) de la chambre de pressage (18) est réduite.
